# EUROPEAN PATENT SPECIFICATION

(11) **EP 2 969 868 B1**
(45) Date of publication and mention of the grant of the patent: **15.02.2017**
(21) Application number: 13717969.3
(22) Date of filing: 15.03.2013
(51) Int. Cl.: B65G 49/06, B62B 1/26, B65D 19/44, B65D 85/48, E04F 21/18, E04F 21/28

(54) **STILLAGE FOR SHEET MATERIALS**
PALETTE FÜR EIN BAHNMATERIAL
PLATE-FORME POUR MATÉRIAUX SOUS FORME DE FEUILLES

(43) Date of publication of application: 20.01.2016
(73) Proprietor: Grimshaw, Ian, Stockport, Cheshire SK3 8SR (GB)
(72) Inventor: Grimshaw, Ian, Stockport, Cheshire SK3 8SR (GB)
(74) Representative: Hector, Annabel Mary
(86) International application number: PCT/GB2013/050675
(87) International publication number: WO 2014/140508

(56) References cited:
- EP-A2- 1 142 756
- GB-A- 989 763
- GB-A- 2 496 931
- US-A- 2 828 869
- US-A- 5 641 076

## Description

This invention relates to a stillage for sheet materials. There is a requirement to store glass and other sheet type materials, in a safe and manageable form. This can be within a workshop or on site prior to the fitting or utilisation of such products.

For example, It has been the practice for many years to either carry or hoist glass and other sheet type materials to the desired floor level on site and then to store this glass or other product in bulk prior to fitting. This practice for example, has resulted in persons trying to retain glass sheets in the vertical orientation so that it is easy to handle the sheets by manual or mechanical means.

One problem with this approach is that the glass or other products may have been leant against a column or other structure prior to use. The glass sheet either during its removal from bulk or even in a singular state, can slip or topple, when in a static vertical but unsafe or unsecured condition. Glass has on occasion slipped or fallen and caused severe injury to personnel.

Several health and safety conscious companies have now insisted that each individual sheet of glass has to be band wrapped to a glass stillage, which usually takes the form of a timber or steel A frame, prior to and during their use and storage. For example, if a sheet of glass is required for use and is un banded, should the sheet not be fitted immediately, it has to be taken back to the stillage and re banded. This is very time consuming, costly and can damage the glass on its face or edges. An additional issue is waste removal, and the banding being a trip hazard should it not be disposed of correctly.

EP 1 142 756 A2 discloses a frame having straps which are tensioned to form a holding enclosure for packets of glass. US 2828 869 A discloses a hoist for handling large flat prefabricated building sections, comprising a telescoping frame structure and a swinging frame. US 641 076 A discloses a storage rack for glass sheets having rotatable arms including a spacer portion which can be placed between glass sheets. GB 989 763 A discloses a trolley for transporting sheet material with a support member arranged so as to be capable of maintaining the sheet in the substantially vertical position.

According to the present invention, there is provided a stillage adapted for the storage of at least one sheet of material in the vertical configuration, the stillage comprising a frame, having a threaded member rotatably mounted on the frame and arranged to be adjacent the upper edge of the sheet, characterised by the frame having at least one castellated base rail adapted to engage a lower edge of at least one sheet, wherein the threaded member is adapted to engage said upper
sheet edge within the threads, thereby holding the sheet vertically.

The threaded member may be rotated to draw the upper edge of the sheet in, and a further sheet may be introduced, with the castellated base rail securing the lower edge of each sheet.

In order that the invention may be more readily understood, reference will now be made to the accompanying drawings, in which:

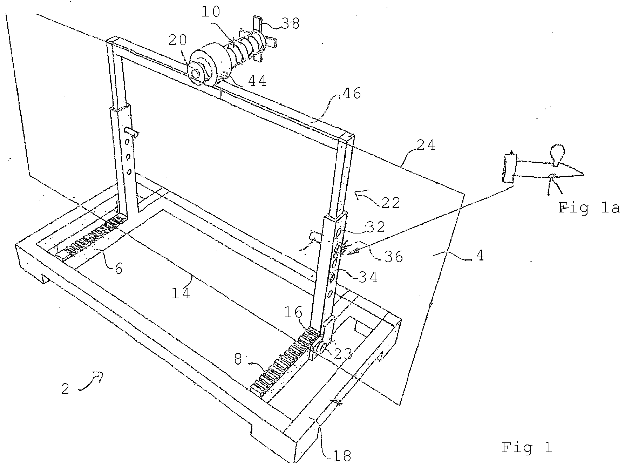

Figure 1 is a front perspective view of a stillage assembly according to one embodiment of the invention;
Figure 1 a is an expanded view of part of Figure 1;
Figure 2 is a rear perspective view of the stillage of Figure 1;
Figure 3 is an expanded view of part of the stillage as shown in Figure 2;
Figure 4 is a side view of the threaded member and nut of the stillage of Figure 1;
Figure 5 is a front perspective view of the threaded member of Figure 4;
Figure 6a and 6b are further front perspective views, Figure 6c is a cross-section side view, and 6d and 6e are plan and side views respectively of the threaded member of Figure 4;
Figure 7 is an expanded side view of the threaded member and nut;
Figures 8a and 8b are an expanded cross-section plan view Y-Y and an expanded side view respectively of the threaded member and nut of Figure 4.

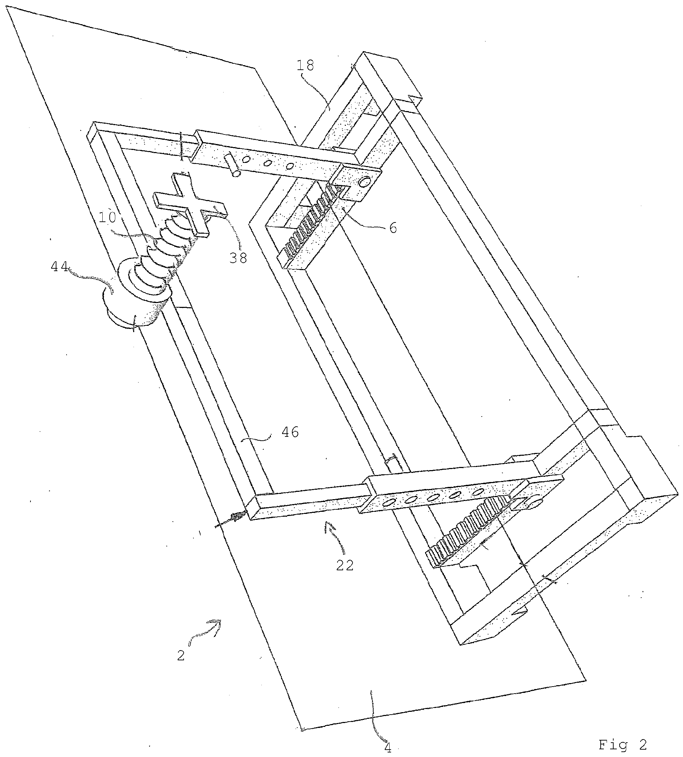

Referring to Figures 1 to 3, a stillage (2) retains the glass or other sheet products (4) between a pair of base rails (6) for example formed of plastic material, and having castellations (8), and within the depth of a helical thread (10). This is accomplished by placing the panel of glass centrally (side to side) within the base plastic rails (6) (see Figs 1,2 & 3), so that the castellations (8) retain the base of the glass in a secure manner within their depth. The helical threaded member (12) is retracted to the point above the inner-most castellation (16) allowing the glass to be about 90 degrees to the base frame (18) and thus resting on the face (20) of the plastic thread.

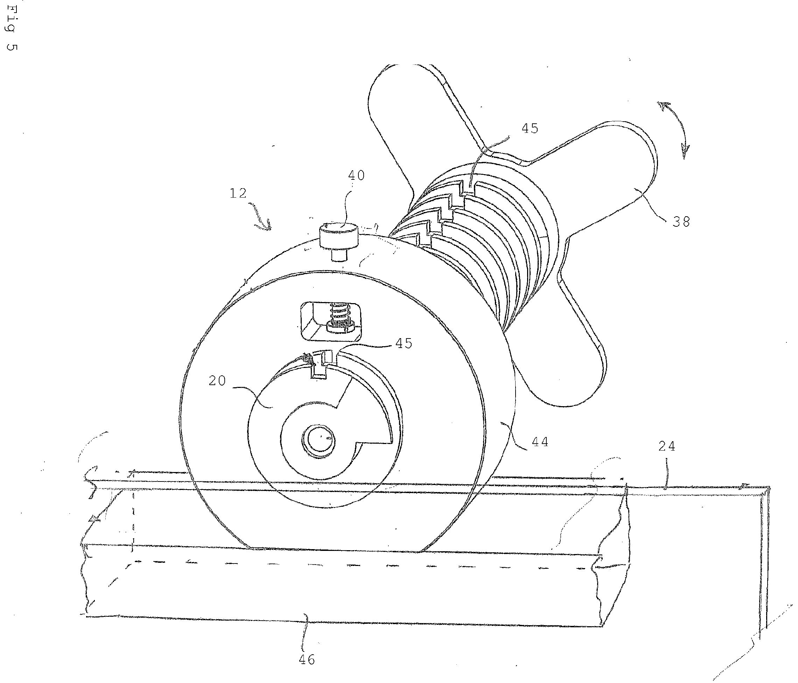

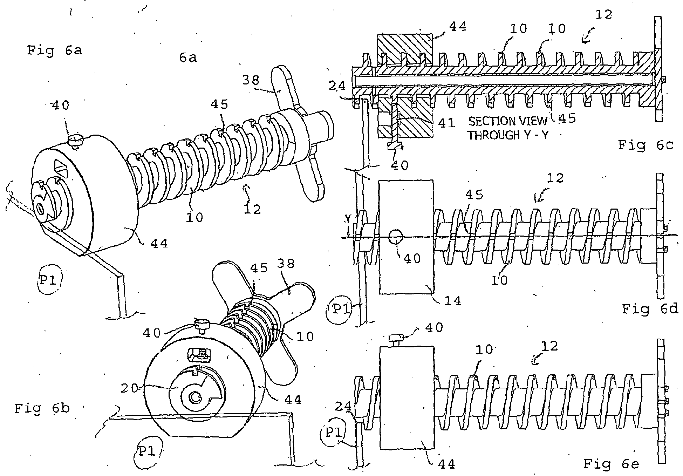

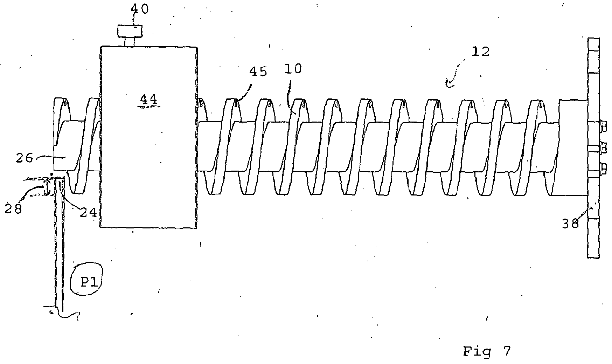

The upper or second frame (22) is raised or lowered telescopically to suit the glass or product sheet size, so that the top edge (24) of the product to be retained, will fall within the depth of the helical thread (12) but below the central core (26) of the threaded member (12) making sure the set position allows for example at least 10mm glass edge cover (28) (see Figs 5 & 6 and position (P1), and Fig. 7). After the adjustable frame (22) has been raised or lowered to suit the product, a securing pin (30) is located through a selected one of a plurality of spaced apertures (32) in the pair of outer telescopic members (34) so as to lock the frame (22) in position. A safety clip (36) is then used to fix the pin (30) into position.

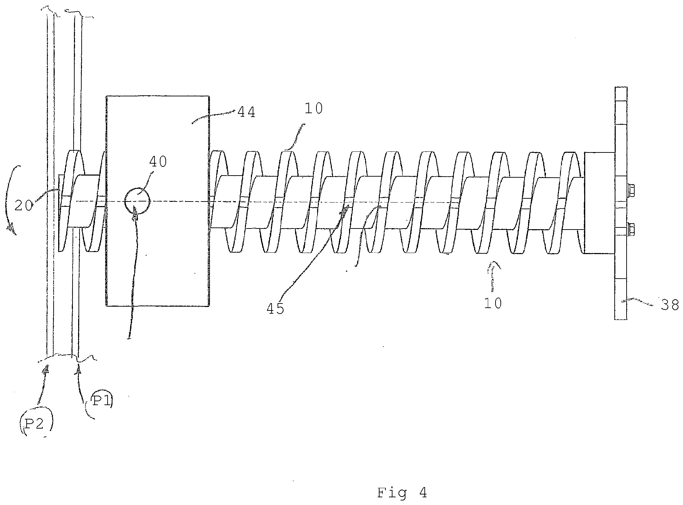

After adjusting the frame (22) into the desired position and placing the glass into the lower castellations (8), the threaded member (12) is rotated by a handle (38) to put the thread (10) into the correct position, as claimed in Fig 5, and position P1 shown in Figs 6 & 7. In doing so the helical thread (10) laps the glass at its upper edge (24) for one thread pitch. The safety plunger (40) (see Figs 4,5,6,7 and 8), will drop into the thread slots (42) (Figs 4 & 5) and prevent further rotation of threaded member (12). The slots (42) are aligned along the length of the threaded member (12), such that the plunger (40) riding over the thread (10) will drop into a slot (42) once per revolution. The next sheet is placed onto the open face (20) of threaded member (12) as shown in Fig 4 position P2. The safety plunger (40) is arranged to be manually lifted so as to overcome the force of the spring (41) within, (see Figs. 4,5 & 8) and the threaded member (12) is again rotated through a fixed nut (44), which is fixedly mounted on a cross-member (46) of the upper frame (22), for one revolution, so as to encapsulate the edge (24) of the glass again (see Fig. 4). The process is repeated until the desired number of sheets (4) are retained within the helical threaded member (12) and the lower castellated base (6).

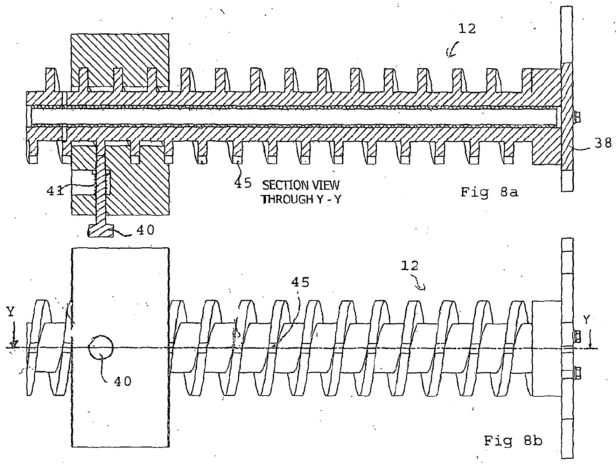

To remove the glass (4) for use, the process is reversed. The glass (4) is held by hand or by the use of a glass suction device affixed to the front face of the glass sheet by operative number 1, whilst the second operative lifts the safety plunger (40) (see Figs 5 & 8). The operator number 2 rotates the threaded member (12) through the static nut (44) in the opposite direction until the thread (10) releases the top edge of the first piece of glass, whilst still retaining the other sheets within the helical thread (10) in a safe condition. As the glass comes to the point of release it is then in an unsafe condition and must be held by an operator until both have a good grip of the sheet and are ready to lift free from the castellated base members (6) for use or distribution.

Due to the fact that once the helical threaded member (12) during either loading or unloading, has rotated one rotation through the fixed nut (44), the safety plunger (40) is forced by its spring (41) down into the thread cut out (42) (see Fig 8) and prevents any further rotation of the member (12) until plunger (45) is manually lifted against the force of the spring (41).

The primary components, threaded member (12), nut (44), castellated plastic base rails (6) and adjustable upper frame (22) are all attached to the main base frame (18), for example formed of hollow section alloy.

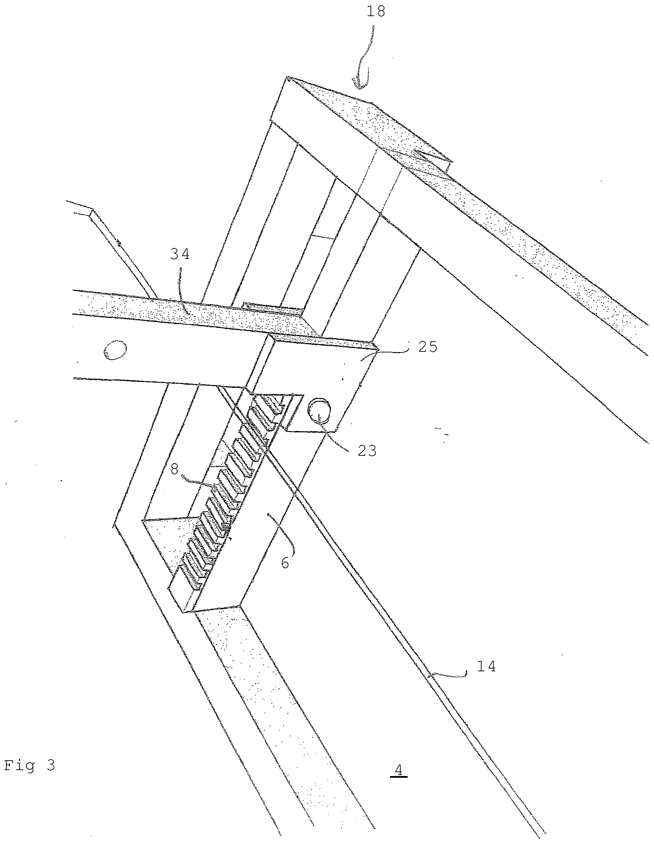

The storage or transport of the stillage, the upper frame (22) may be folded about a pair of pivots (23) mounting the upper frame (22) onto the lower frame (18) via a bracket (25) (see Fig 3) so as to lie flat against each other.

The stillage (2) can be made to accommodate varying product sizes by increasing the dimensions of the component parts, thread pitch and castellation pitch and width etc.

Key
- (44): Large plastic nut
- (38): Four point plastic handle
- (12): Coarse plastic helical threaded shaft (upper product edge support)
- (6): Castellated plastic base rail (product lower edge support)
- (23): Pivot pin
- (22): Height adjustable top alloy frame
- (20): Load positional face of plastic helical thread
- (40): Spring loaded safety plunger pin
- (42): Safety plunger thread cut out
- (4): Sheet product
- (P1): Product load position 1
- (P2): Product load position 2
- (30): Tapered frame locking pin
- (36): Tapered locking pin securing clip
- (18): Hollow section fabricated base frame

## Claims

1. A stillage adapted for the storage of at least one sheet of material (4) in the vertical configuration, the stillage (2) comprising a frame (18), having a threaded member (12) rotatably mounted on the frame (18) and arranged to be adjacent the upper edge (24) of the sheet (4) **characterised by** the frame (18) having at least one castellated base rail (6) adapted to engage a lower edge (14) of at least one sheet (4), wherein the threaded member (12) is adapted to engage said upper edge (24) within the threads (10), thereby holding the sheet (4) vertically.

2. A stillage as defined in claim 1, wherein the castellated base rail(s) (6) and/or the threaded member (12) are formed from a plastics material.

3. A stillage as defined by claim 1 or 2 adapted for the storage of panes of glass or other sheet materials.

4. A stillage as defined in any proceeding claim wherein the height of the threaded member (12) is adjustable to accommodate a range of sheet sizes.

5. A stillage as claimed in any one of claims 1 to 4, comprising a spaced pair of base rails (6).

6. A stillage as defined by any preceding claim further comprising a first frame (18) carrying the base rails and a second frame (22) pivotally connected to the first frame (18) and carrying the threaded member (12), wherein the said pivotal connection is adapted to allow the frames to be folded flat.

7. A stillage as defined in any preceding claim, wherein the threaded member (12) further comprises a safety device (40) adapted to lock the threaded member (12) in place and thereby prevent accidental rotation of the same.

8. A stillage as claimed in claim 7, in which the safety device (40) comprises a plunger (40), mounted on the frame (22) and biased towards the threaded member (12), and a plurality of spaced corresponding recesses (42) provided in the threaded member (12) to engage with the plunger (40) and prevent rotation.

9. A stillage, as claimed in claim 8, in which the plunger (40) is arranged to be manually movable against the bias away from the threaded member (12) to release the threaded member (12) for rotation.

10. A stillage as claimed in claim 8 or 9, in which the plunger (40) is mounted to a nut (44) for the threaded member (12), the nut (44) being fixedly mounted to the frame (22).

11. A method of storing a plurality of glass or other sheet material comprising; (a) providing a stillage (2) according to any proceeding claim; (b) locating the lower edge of a sheet (4) to be stored in the castellated base rail(s) (6); (c) rotating the threaded member (12) to bring it into engagement with the top edge (24) of the sheet (4) and; (d) repeating steps b-c with subsequent sheets.

12. A method of releasing a glass or other sheet materials for use comprising; with a stillage (2) as defined by any of claims 1-10, rotating the threaded member (12) to release the upper edge (24) of a glass sheet or other sheet material and lifting the sheet (4) clear of the stillage (2).

## Patentansprüche

1. Gestell zum Lagern von wenigstens einer Materialplatte (4) in vertikaler Konfiguration, wobei das Gestell (2) einen Rahmen (18) mit einem Gewindeelement (12) umfasst, das drehbar an dem Rahmen (18) montiert und so angeordnet ist, dass es sich neben dem oberen Rand (24) der Platte (4) befindet, **dadurch gekennzeichnet, dass** der Rahmen (18) wenigstens eine zinnenartige Bodenschiene (6) zum Eingreifen in einen unteren Rand (14) von wenigstens einer Platte (4) hat, wobei das Gewindeelement (12) für einen Eingriff in den genannten oberen Rand (24) in dem Gewinde (10) ausgelegt ist, um dadurch die Platte (4) vertikal zu halten.

2. Gestell nach Anspruch 1, wobei die zinnenartige(n) Basisschiene(n) (6) und/oder das Gewindeelement (12) aus einem Plastikmaterial gebildet ist/sind.

3. Gestell nach Anspruch 1 oder 2 zum Lagern von Scheiben aus Glas oder anderen Plattenmaterialien.

4. Gestell nach einem vorherigen Anspruch, wobei die Höhe des Gewindeelements (12) zum Aufnehmen einer Reihe von Plattengrößen justierbar ist.

5. Gestell nach einem der Ansprüche 1 bis 4, das ein beabstandetes Paar Bodenschienen (6) umfasst.

6. Gestell nach einem vorherigen Anspruch, das ferner einen ersten Rahmen (18) umfasst, der die Basisschienen trägt, und einen zweiten Rahmen (22), der schwenkbar mit dem ersten Rahmen (18) verbunden ist und das Gewindeelement (12) trägt, wobei die genannte Schwenkverbindung so ausgelegt ist, dass die Rahmen flach gefaltet werden können.

7. Gestell nach einem vorherigen Anspruch, wobei das Gewindeelement (12) ferner eine Sicherheitsvorrichtung (40) zum Verriegeln des Gewindeelements (12) an seinem Ort umfasst, um dadurch ein versehentliches Drehen desselben zu verhindern.

8. Gestell nach Anspruch 7, wobei die Sicherheitsvorrichtung (40) einen an dem Rahmen (22) montierten und in Richtung des Gewindeelements (12) vorgespannten Stößel (40) und mehrere beabstandete entsprechende Aussparungen (42) umfasst, die in dem Gewindeelement (12) vorgesehen sind, um mit dem Stößel (40) in Eingriff zu kommen und eine Drehung zu verhindern.

9. Gestell nach Anspruch 8, wobei der Stößel (40) so ausgelegt ist, dass er manuell gegen die Vorspannung von dem Gewindeelement (12) weg bewegt werden kann, um das Gewindeelement (12) zum Drehen freizugeben.

10. Gestell nach Anspruch 8 oder 9, wobei der Stößel (40) an einer Mutter (44) für das Gewindeelement (12) montiert ist, wobei die Mutter (44) fest an dem Rahmen (22) montiert ist.

11. Verfahren zum Lagern von mehreren Platten aus Glas oder anderen Plattenmaterialien, das Folgendes beinhaltet: (a) Bereitstellen eines Gestells (2) nach einem vorherigen Anspruch; (b) Positionieren des unteren Randes einer zu lagernden Platte (4) in der/den zinnenartigen Basisschiene(n) (6); (c) Drehen des Gewindeelements (12), um es mit dem oberen Rand (24) der Platte (4) in Eingriff zu bringen, und (d) Wiederholen der Schritte b-c mit nachfolgenden Platten.

12. Verfahren zum Lösen einer Platte aus Glas oder anderen Plattenmaterialien für den Gebrauch, das Folgendes beinhaltet: Drehen, mit einem Gestell (2) nach einem der Ansprüche 1-10, des Gewindeelements (12) zum Lösen des oberen Randes (24) einer Platte aus Glas oder einem anderen Plattenmaterial und Abheben der Platte (4) von dem Gestell (2).

## Revendications

1. Plate-forme adaptée pour le stockage d'au moins une feuille de matériau (4) selon une configuration verticale, la plate-forme (2) comportant un cadre (18), ayant un élément fileté (12) monté de manière rotative sur le cadre (18) et agencé pour être adjacent par rapport au bord supérieur (24) de la feuille (4) **caractérisée par** le cadre (18) ayant au moins un rail de base crénelé (6) adapté pour se mettre en prise avec un bord inférieur (14) d'au moins une feuille (4),dans laquelle l'élément fileté (12) est adapté pour se mettre en prise avec ledit bord supérieur (24) dans les limites des filets (10), pour de ce fait tenir la feuille (4) à la verticale.

2. Plate-forme selon la revendication 1, dans laquelle le(s) rail(s) de base crénelé(s) (6) et/ou l'élément fileté (12) sont formés à partir d'une matière plastique.

3. Plate-forme selon la revendication 1 ou la revendication 2, adaptée pour le stockage de panneaux de verre ou autres matériaux sous forme de feuilles.

4. Plate-forme selon l'une quelconque des revendications précédentes, dans laquelle la hauteur de l'élément fileté (12) est ajustable pour recevoir une gamme de tailles de feuille.

5. Plate-forme selon l'une quelconque des revendications 1 à 4, comportant une paire espacée de rails de base (6).

6. Plate-forme selon l'une quelconque des revendications précédentes, comportant par ailleurs un premier cadre (18) portant les rails de base et un deuxième cadre (22) raccordé de manière pivotante au premier cadre (18) et portant l'élément fileté (12), dans laquelle ledit raccord pivotant est adapté pour permettre de plier les cadres à plat.

7. Plate-forme selon l'une quelconque des revendications précédentes, dans laquelle l'élément fileté (12) comporte par ailleurs un dispositif de sécurité (40) adapté pour verrouiller l'élément fileté (12) en place et empêcher de ce fait toute rotation accidentelle de celui-ci.

8. Plate-forme selon la revendication 7, dans laquelle le dispositif de sécurité (40) comporte un élément plongeur (40), monté sur le cadre (22) et sollicité vers l'élément fileté (12), et une pluralité d'évidements correspondants espacés (42) mis en oeuvre dans l'élément fileté (12) pour se mettre en prise avec l'élément plongeur (40) et pour empêcher toute rotation.

9. Plate-forme selon la revendication 8, dans laquelle l'élément plongeur (40) est agencé pour être manuellement mobile contre la sollicitation pour aller à l'opposé de l'élément fileté (12) pour libérer l'élément fileté (12) à des fins de rotation.

10. Plate-forme selon la revendication 8 ou la revendication 9, dans laquelle l'élément plongeur (40) est monté sur un écrou (44) pour l'élément fileté (12), l'écrou (44) étant monté de manière fixe sur le cadre (22).

11. Procédé permettant de stocker une pluralité de panneaux de verre ou autres matériaux sous forme de feuilles comportant les étapes consistant à ; (a) mettre en oeuvre une plate-forme (2) selon l'une quelconque des revendications précédentes ; (b) positionner le bord inférieur d'une feuille (4) devant être stockée dans le(s) rail(s) de base crénelé(s) (6) ; (c) faire tourner l'élément fileté (12) pour le mettre en prise avec le bord supérieur (24) de la feuille (4) et ; (d) répéter les étapes b et c avec les feuilles suivantes.

12. Procédé permettant de libérer un panneau de verre ou autres matériaux sous forme de feuilles à des fins d'utilisation comportant les étapes consistant à ; avec une plate-forme (2) selon l'une quelconque des revendications 1 à 10, faire tourner l'élément fileté (12) pour libérer le bord supérieur (24) d'un panneau de verre ou autre matériau sous forme de feuille et soulever la feuille (4) pour l'écarter de la plate-forme (2).
